# EUROPÄISCHE PATENTSCHRIFT

(11) **EP 4 175 916 B1**
(45) Veröffentlichungstag und Bekanntmachung des Hinweises auf die Patenterteilung: **28.08.2024**
(21) Anmeldenummer: 21746334.8
(22) Anmeldetag: 01.07.2021
(51) Int. Cl.: C02F 3/12, C02F 3/04, C02F 3/06, C02F 3/10

(54) **KLEINKLÄRANLAGE**
SMALL SEWAGE TREATMENT PLANT
PETITE STATION D'ÉPURATION DES EAUX USÉES

(30) Priorität: 02.07.2020 DE 202020103837 U
(43) Veröffentlichungstag der Anmeldung: 10.05.2023
(73) Patentinhaber: Richter, Bodo, 53604 Bad Honnef (DE)
(72) Erfinder: Richter, Bodo, 53604 Bad Honnef (DE)
(74) Vertreter: Schaumburg und Partner Patentanwälte mbB
(86) Internationale Anmeldenummer: PCT/EP2021/068141
(87) Internationale Veröffentlichungsnummer: WO 2022/003091

(56) Entgegenhaltungen:
- EP-A1- 1 636 140
- EP-A1- 3 636 405
- US-A1- 2018 093 907

## Beschreibung

Die Erfindung betrifft eine Kleinkläranlage, umfassend einen ersten Klärbehälter mit einer Zuführung für Abwasser, in welcher eine Vorklärung infolge Absinkens von Feststoffteilen auf den Boden des ersten Klärbehälters erfolgt, einen zweiten Klärbehälter, der mit dem ersten Klärbehälter über einen Überlauf verbunden ist, über den vorgeklärtes Abwasser dem zweiten Klärbehälter zuführbar ist, eine mehrere Filter umfassende Filtervorrichtung im zweiten Klärbehälter, der das vorgeklärte Abwasser zur weiteren Klärung von oben zugeführt ist, und einen Ablauf unterhalb der Filtervorrichtung, über den das gefilterte Abwasser ableitbar ist.Z Ein Beispiel für eine derartige Anlage ist in EP 3 636 405 A1 beschrieben.

Eine solche Kleinkläranlage dient zur Reinigung von Abwasser mit einem Bemessungswert von vier bis fünfzig Einwohnereinheiten, insbesondere für den Einsatz in Wohneinheiten für fünf bis zwanzig Personen. Somit kommen Sie bei Einzelhäusern, kleinen Siedlungen, Gastwirtschaften oder Schutzhütten zum Einsatz, wenn eine Abwasserentsorgung durch Anschluss an große kommunale Kläranlagen aus technischen, satzungsrechtlichen oder finanziellen Gründen nicht in Frage kommt. Typischerweise erfolgt die Abwasserklärung mittels zweier Klärbehälter, wobei in einem ersten Klärbehälter die Vorklärung erfolgt und das vorgeklärte Abwasser dem zweiten Klärbehälter zugeführt wird, wo es durch ein Filterpaket in der Filtervorrichtung weiter geklärt wird, welche als biologisches Filter ohne Fremdbelüftung wirksam ist. Das geklärte Abwasser wird dann über einen unteren Ablauf aus dem zweiten Klärbehälter abgeleitet. Im Betrieb ist also der erste Klärbehälter stets bis zum Überlauf mit Abwasser gefüllt, während sich im zweiten Klärbehälter kein Abwasser sammelt, der also fortlaufend geleert wird.

Die in der Kleinkläranlage eingesetzten Filter müssen je nach Beaufschlagung turnusmäßig gewartet und gereinigt werden. Hierbei wird der Absatzschlamm aus dem ersten Klärbehälter abgesaugt und entsorgt. Die Reinigung der Filter in der Filtervorrichtung erfolgt innerhalb des zweiten Klärbehälters, wobei typischerweise ein Wasserschlauch über Behälteröffnungen im zweiten Klärbehälter eingeführt und die Filter mit Wasser abgespritzt und damit gereinigt werden. Da die Zugänglichkeit für den zweiten Klärbehälter beschränkt ist, gestaltet sich der Reinigungsvorgang schwierig.

Es ist Aufgabe der Erfindung, eine Kleinkläranlage anzugeben, deren Wartung und Reinigung verbessert ist.

Diese Aufgabe wird dadurch gelöst, dass die Filtervorrichtung eine um eine vertikale Drehachse drehbare Drehplatte umfasst, die mehrere Filterbehälter lagert, wobei jeder Filterbehälter mehrere übereinander angeordnete Filter umfasst, und dass in einem Deckel des zweiten Klärbehälters eine verschließbare Behälteröffnung vorhanden ist, über die mindestens ein Filter entnehmbar ist, wenn der zugehörige Filterbehälter nach entsprechender Drehung der Drehplatte der Behälteröffnung gegenübersteht.

Gemäß der Erfindung können ein oder mehrere Filter des jeweiligen Filterbehälters entnommen und außerhalb des zweiten Klärbehälters gereinigt werden. Vorteilhaft ist es, wenn der gesamte Filterbehälter mit seinen Filtern lösbar in der Drehplatte gelagert ist und dieser Filterbehälter über die Behälteröffnung entnommen wird, um ihn mit seinen Filtern außerhalb des zweiten Klärbehälters zu reinigen. Die Wartung der Filtervorrichtung im zweiten Klärbehälter und auch dessen Reinigung wird auf diese Weise erleichtert. Außerdem können funktionsuntüchtige Filterbehälter insgesamt auf einfache Weise gegen funktionierende ausgetauscht werden.

Gemäß einer Weiterbildung ist oberhalb der Filtervorrichtung eine Verteilvorrichtung vorhanden, die mit dem Überlauf verbunden ist und über die mindestens einem Filterbehälter vorgeklärtes Abwasser zuführbar ist. Typischerweise verteilt die Verteilvorrichtung das vorgeklärte Abwasser auf alle in der Drehplatte vorhandenen Filterbehälter in etwa gleichmäßig. Es ist auch möglich, die Verteilvorrichtung so einzurichten, dass sie vorgeklärtes Abwasser nur auf ausgewählte Filterbehälter verteilt, beispielsweise dann, wenn ein Filterbehälter in seiner Funktion beeinträchtigt ist. Es ist auch möglich, die Zuführung von Abwasser zu ausgewählten Filterbehältern zu drosseln, wodurch die betroffenen Filterbehälter weniger belastet werden. Auf diese Weise können Wartungs- und Reinigungsintervalle verlängert werden.

Eine weitere bevorzugte Ausführungsform sieht vor, dass mehrere Filter eines Filterbehälters zu einer Filtergruppe zusammengefasst sind, wobei diese Filtergruppe über die Behälteröffnung entnehmbar ist. Die Wartung und Reinigung kann in diesem Fall vereinfacht werden, indem stärker belastete Filtergruppen häufiger gereinigt werden als weniger belastete Filtergruppen.

In den Zeichnungen wird ein Ausführungsbeispiel nach dem Stand der Technik sowie ein Ausführungsbeispiel nach der Erfindung dargestellt. Darin zeigt
- Figur 1: schematisch eine Kleinkläranlage nach dem Stand der Technik,
- Figur 2: eine Kleinkläranlage gemäß einem Ausführungsbeispiel der Erfindung,
- Figur 3: eine schematische Draufsicht auf den zweiten Klärbehälter,
- Figur 4: eine Seitenansicht des zweiten Klärbehälters,
- Figur 5: eine perspektivische CAD-Darstellung der Kleinkläranlage,
- Figur 6: die Kleinkläranlage und die Entnahme eines Filterbehälters, und
- Figur 7: schematisch eine Kugelrolle zur drehbaren Lagerung der Drehplatte.

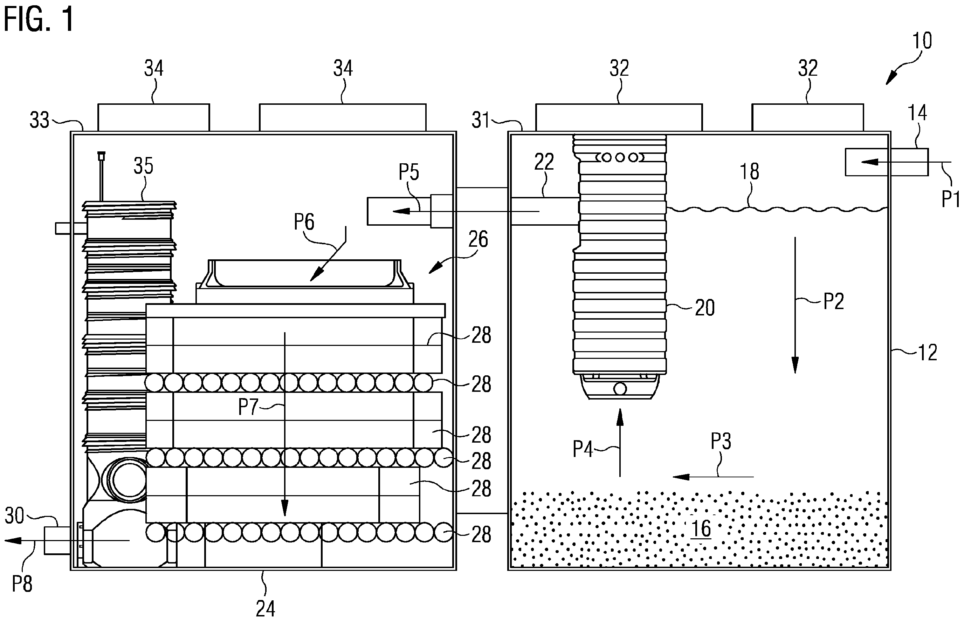

In Figur 1 ist eine Kleinkläranlage 10 nach dem Stand der Technik dargestellt. Sie umfasst einen ersten Klärbehälter 12, dem über einen Zulauf 14 Abwasser gemäß dem Pfeil P1 zugeführt wird. Im ersten Klärbehälter 12 erfolgt eine Vorklärung des Abwassers infolge Absinkens von Feststoffteilen 16 auf den Boden; leichtere Teile, wie z.B. Öle und Fette sammeln sich nahe der Abwasseroberfläche 18. Das Abwasser verläuft entsprechend den Pfeilen P2, P3 und P4 zu einem Vorfilter 20, welcher verschiedene Filterlagen zur Vorfilterung umfasst. Das vorgereinigte Abwasser gelangt über einen Überlauf 22 zu einem zweiten Klärbehälter 24 und wird entsprechend den Pfeilen P5 und P6 einer Filtervorrichtung 26 zugeführt, welche mehrere Filter 28 umfasst, in welchem unter anderem auch eine biologische Filterung erfolgt. Das zu reinigende Abwasser rieselt gemäß dem Pfeil P7 durch die Filtervorrichtung 26 und verlässt unterhalb der Filtervorrichtung 26 als gefiltertes Abwasser über einen Ablauf 30 gemäß dem Pfeil P8 die Kleinkläranlage 10.

Im Deckel 31 des ersten Klärbehälters 12 sind zwei verschließbare Öffnungen 32 enthalten. Über diese Öffnungen 32 kann Schlamm bzw. Feststoffteile und oberflächlicher Abfall aus dem Inneren des Klärbehälters 12 abgesaugt und entsorgt werden. Durch Wasser, welches unter Hochdruck in den ersten Klärbehälter 12 und den Vorfilter 20 gespritzt wird, erfolgt eine Reinigung. Auch im zweiten Leerbehälter 24 sind im Deckelbereich 33 zwei verschließbare Öffnungen 34 enthalten, über die eine Besichtigung des Schmutzzustandes über ein Sichtrohr 35 und/oder eine Reinigung erfolgt. Hierbei wird ein Wasserschlauch über die Öffnung 34 in den zweiten Klärbehälter 24 eingeführt und unter Hochdruck wird die Filtervorrichtung 26 und der Innenraum ausgespritzt und gereinigt. Da die Zugänglichkeit für den zweiten Klärbehälter 24 erheblich eingeschränkt ist, gestaltet sich der Reinigungsvorgang relativ schwierig und ein Ersatz von Filtern 28 ist kompliziert.

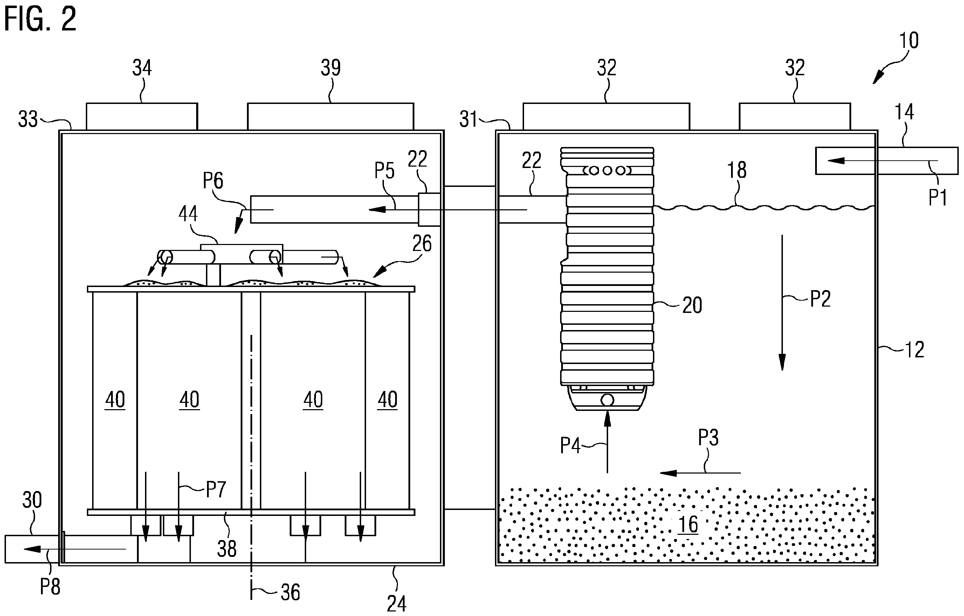

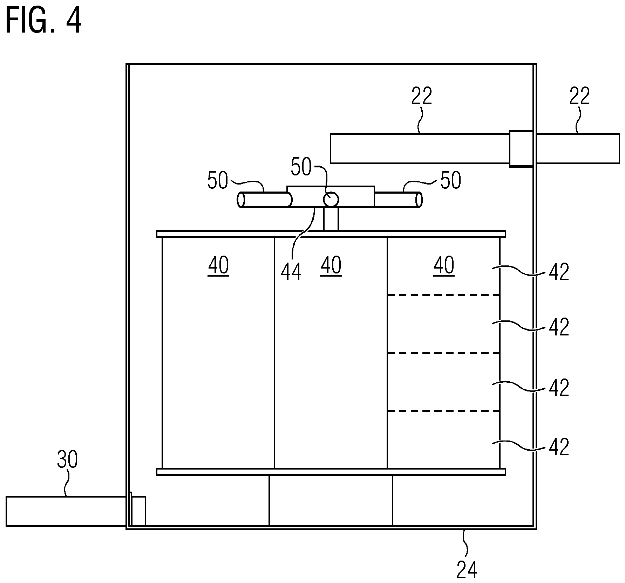

Figur 2 zeigt die Kleinkläranlage 10 in einer erfindungsgemäßen Ausgestaltung. Gleiche Elemente sind nachfolgend gleich bezeichnet. Auch hier wird das vorgeklärte Abwasser über den Überlauf 22 in Richtung des Pfeils P6 über eine Verteilvorrichtung 44 der Filtervorrichtung 26 zugeführt. Diese Filtervorrichtung 26 umfasst eine um eine vertikale Drehachse 36 drehbare Drehplatte 38, die mehrere Filterbehälter 40 lagert. Jeder dieser Filterbehälter 40 umfasst mehrere übereinander angeordnete Filter 42, wie dies beispielhaft in Figur 4 dargestellt ist. Oberhalb der Drehplatte 38 ist eine Verteilvorrichtung 44 angeordnet, welche das vorgefilterte Abwasser an die verschiedenen Filterbehälter 40 verteilt.

Im Deckel 33 ist eine verschließbare Behälteröffnung 39 enthalten, dessen Öffnungsweite größer als der Durchmesser des Filterbehälters 40 ist, derart, dass der Filterbehälter 40 oder zumindest eines in ihm enthaltenen Filters 42 entnommen werden kann, wenn durch eine entsprechende Drehung der Drehplatte 38 ein bestimmter Filterbehälter 40 der Behälteröffnung 39 gegenübersteht und mit ihr fluchtet.

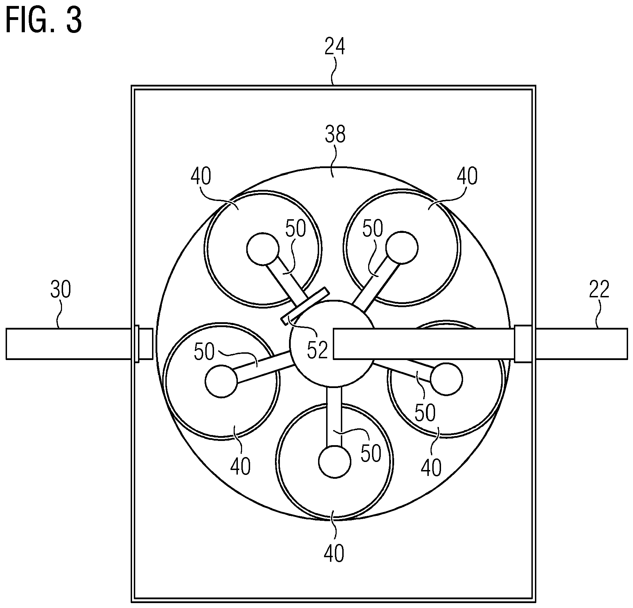

Figur 3 zeigt eine Draufsicht auf den zweiten Klärbehälter 24. Zu erkennen ist die Anordnung der Filterbehälter 40 auf der Grundfläche der Drehplatte 38. Die Verteilvorrichtung 44 hat Verteilarme 50, welche den Filterbehältern 40 vorgeklärtes Abwasser zuführt. Die Filterbehälter 40 sind als Zylinder mit vertikaler Längsachse ausgebildet, welche Filter mit kreisförmigem Querschnitt aufnehmen. Die Filterbehälter 40 können jedoch auch andere Querschnittsformen annehmen, beispielsweise eine Dreiecksform oder Vieleckform oder die Form eines Kreissegments. Hierdurch kann der Raum im Bereich der Drehplatte 38 zur Filterung besser genutzt werden. An einem der Verteilarme 50 ist in Figur 3 ein Drosselelement 52 dargestellt, über das die Zufuhr von Abwasser zum betreffenden Filterbehälter gedrosselt oder ganz abgeschaltet werden kann.

Figur 4 zeigt schematisch eine Seitenansicht des zweiten Klärbehälters 24. Bei einem der Filterbehälter 40 sind lagenförmige Filter 42 eingezeichnet.

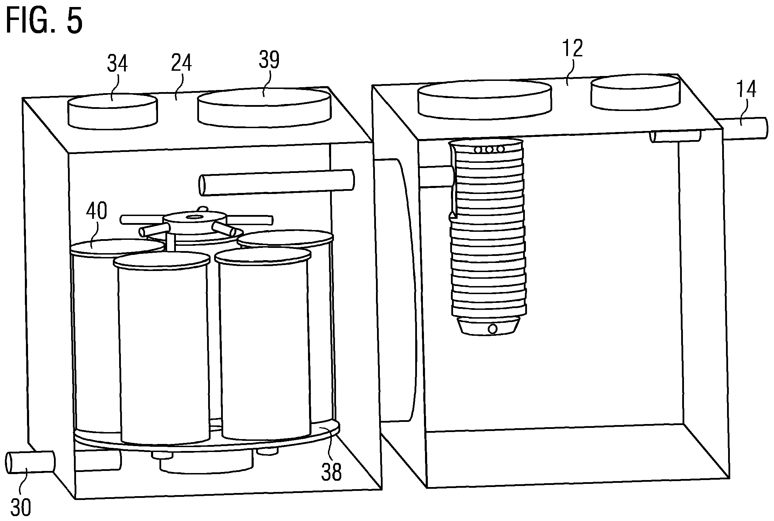

Figur 5 zeigt eine schematische CAD-Darstellung in Perspektivansicht. Die verschiedenen zylinderförmigen Filterbehälter 40 sind auf der Drehplatte 38 angeordnet. Bei Drehung der Drehplatte 38 um die Achse 36 werden die Filterbehälter 40 mitgedreht und können mit der Behälteröffnung 39 fluchtend zur Deckung gebracht werden, um von außen Zugriff auf den Filterbehälter 40 bzw. die in ihm enthaltenen Filter 42 zu erhalten.

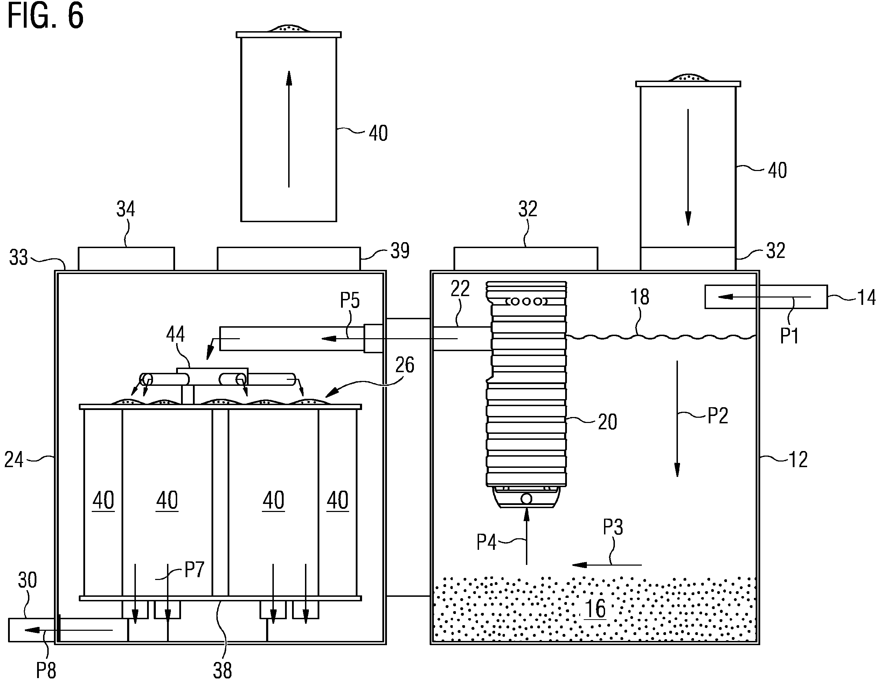

Figur 6 zeigt das Ausführungsbeispiel nach Figur 2. Die Drehplatte 38 ist soweit gedreht, dass ein Filterbehälter 40 der Behälteröffnung 39 gegenübersteht. Dieser Filterbehälter 40 kann dann über diese Öffnung entnommen und außerhalb des zweiten Klärbehälters 24 gereinigt werden. Eine Variante sieht vor, diesen Filterbehälter 40 auf die Öffnung 32 im ersten Klärbehälter 12 aufzusetzen und dort zu befestigen, beispielsweise durch Verschrauben. Dadurch wir des möglich, von außerhalb diesen Filterbehälter 40 mit Hochdruckwasser zu spülen und zu reinigen. Das dabei entstehende Schmutzwasser gelangt in den ersten Klärbehälter 12. Außerhalb der Kleinkläranlage 10 entsteht auf diese Weise kein Schmutzwasser bei der Reinigung der Filterbehälter 40 aus dem zweiten Klärbehälter 24. Die Kleinkläranlage 10 hat ein Gesamtvolumen von 2500 bis 25000 Liter. Ein Filterbehälter umfasst typischerweise ein Volumen von 200 Liter.

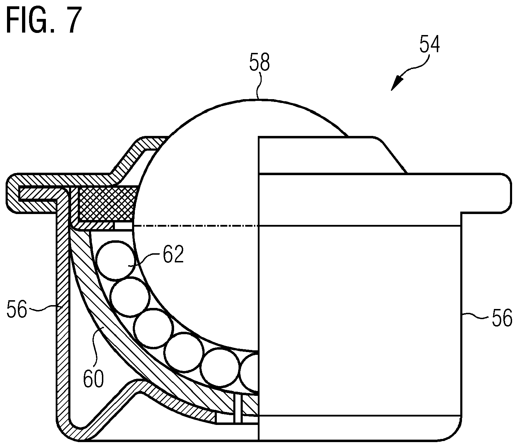

Figur 7 zeigt schematisch eine Kugelrolle 54, die als Konstruktionselement zur Lagerung und Drehung der Drehplatte 38 dient. Die Kugelrolle 54 umfasst ein Gehäuse 56, eine Laufkugel 58, eine Tragschale 60 und eine Vielzahl kleiner Tragkugeln 62, die reibungsarm in alle Richtungen verdrehbar sind. Diese Tragkugeln 62 wälzen sich bei der Drehung der Laufkugel 58 auf dem Boden des zweiten Klärbehälters 24 in der Tragschale 60 ab. Mehrere solcher Kugelrollen 54 werden mit ihren Gehäusen 56 an der Drehplatte 38 befestigt und ermöglichen deren Drehung. Als alternatives Konstruktionselement zur Kugelrolle sind Rollenelemente, z.B. Stuhlrollen oder Zylinder-Kugelrollen einsetzbar. Die Drehung der Drehplatte 38 erfolgt vorzugsweise im Rahmen der Reinigung per Hand. Eine motorische Drehung ist alternativ möglich.

Die gezeigten Ausführungsbeispiele können im Rahmen der Erfindung vielfältig abgewandelt sein. Beispielsweise kann die Drehplatte lediglich eine Basisplatte umfassen, auf der die Filterbehälter 40 stehen. Vorteilhaft ist es dann, die Filterbehälter 40 auf dieser Basisplatte stabil zu befestigen. Die Basisplatte kann auch Vertiefungen aufweisen, in welche die Filterbehälter 40 eingesetzt sind. Unterhalb der Grundplatte und mit dieser verbunden kann ein Wassersammler angeordnet sein, welcher das gefilterte Abwasser sammelt und zum Ablauf 30 führt.

Mehrere Filter 42 eines Filterbehälters 40 können auch zu einer Filtergruppe zusammengefasst sein. Wenn der Filterbehälter 40 der Behälteröffnung 39 gegenübersteht, kann eine oder mehrere Filtergruppen über diese Behälteröffnung 39 entnommen und gereinigt werden. Bei einer Variante können die Filterbehälter 40 fest mit der Drehplatte 38 verbunden sein und über die Behälteröffnung 39 werden lediglich Filter 42 oder Filtergruppen entnommen und gereinigt. Vorteilhaft ist es auch, wenn der erste Klärbehälter 12 mit dem zweiten Klärbehälter 24 starr verbunden ist, so dass die gesamte Kleinkläranlage eine verbesserte Stabilität hat.

### Bezugszeichenliste

- 10: Kleinkläranlage
- 12: erster Klärbehälter
- 14: Zulauf
- P1 bis P8: Richtungspfeile
- 16: Feststoffeile
- 18: Abwasseroberfläche
- 20: Vorfilter
- 22: Überlauf
- 24: zweiter Klärbehälter
- 26: Filtervorrichtung
- 28: Filter
- 31: Deckel
- 32: Öffnung
- 33: Deckelbereich
- 34: Öffnung
- 35: Sichtrohr
- 36: Drehachse
- 38: Drehplatte
- 39: verschließbare Behälteröffnung
- 40: Filterbehälter
- 42: Filter
- 44: Verteilvorrichtung
- 50: Verteilarme
- 52: Drosselelement
- 54: Kugelrolle
- 56: Gehäuse
- 58: Laufkugel
- 60: Tragschale
- 62: Tragkugel

## Patentansprüche

1. Kleinkläranlage (10), umfassend
einen ersten Klärbehälter (12) mit einer Zuführung (14) für Abwasser, in welcher eine Vorklärung infolge Absinkens von Feststoffteilen (16) auf den Boden des ersten Klärbehälters (12) erfolgt,
einen zweiten Klärbehälter (24), der mit dem ersten Klärbehälter (12) über einen Überlauf (22) verbunden ist, über den vorgeklärtes Abwasser dem zweiten Klärbehälter (24) zuführbar ist,
eine mehrere Filter (42) umfassende Filtervorrichtung (26) im zweiten Klärbehälter (24), der das vorgeklärte Abwasser zur weiteren Klärung von oben zugeführt ist,
und einen Ablauf (30) unterhalb der Filtervorrichtung (26), über den das gefilterte Abwasser ableitbar ist,
**dadurch gekennzeichnet, dass** die Filtervorrichtung (26) eine um eine vertikale Drehachse (36) drehbare Drehplatte (38) umfasst, die mehrere Filterbehälter (40) lagert, wobei jeder Filterbehälter (40) mehrere übereinander angeordnete Filter (42) umfasst, und dass
in einem Deckel (33) des zweiten Klärbehälters (24) eine verschließbare Behälteröffnung (39) vorhanden ist, über die mindestens ein Filter (42) entnehmbar ist,
wenn der zugehörige Filterbehälter (40) nach entsprechender Drehung der Drehplatte (38) der Behälteröffnung (39) gegenübersteht.

2. Kleinkläranlage nach Anspruch 1, **dadurch gekennzeichnet, dass** der Filterbehälter (40) zusammen mit seinen Filtern (42) entnehmbar ist.

3. Kleinkläranlage nach Anspruch 1 oder 2, **dadurch gekennzeichnet, dass** oberhalb der Filtervorrichtung (26) eine Verteilvorrichtung (44) vorhanden ist, die mit dem Überlauf (22) verbunden ist und über die mindestens einem Filterbehälter (40) vorgeklärtes Abwasser zuführbar ist.

4. Kleinkläranlage nach einem der vorhergehenden Ansprüche, **dadurch gekennzeichnet, dass** jeder Filterbehälter (40) als Zylinder mit vertikaler Längsachse ausgebildet ist, die die Filter (42) mit kreisförmigem Querschnitt aufnimmt.

5. Kleinkläranlage nach einem der vorhergehenden Ansprüche, bei dem mehrere Filter (42) eines Filterbehälters (40) zu einer Filtergruppe zusammengefasst sind, wobei die Filtergruppe über die Behälteröffnung (39) entnehmbar ist.

6. Kleinkläranlage nach einem der vorhergehenden Ansprüche, **dadurch gekennzeichnet, dass** der erste Klärbehälter (12) als geschlossener Behälter ausgebildet ist.

7. Kleinkläranlage nach einem der vorhergehenden Ansprüche, **dadurch gekennzeichnet, dass** der erste Klärbehälter (12) mit dem zweiten Klärbehälter (24) starr verbunden ist.

8. Kleinkläranlage nach einem der vorhergehenden Ansprüche, **dadurch gekennzeichnet, dass** der erste Klärbehälter (12) und der zweite Klärbehälter (24) zusammen ein Aufnahmevolumen von 10 bis 40 m³ umfassen.

9. Kleinkläranlage nach einem der vorhergehenden Ansprüche, **dadurch gekennzeichnet, dass** die Verteilvorrichtung (44) mindestens ein Drosselelement (52) umfasst, mit dem der Zufluss von vorgeklärtem Abwasser zum Filterbehälter drosselbar ist.

10. Kleinkläranlage nach einem der vorhergehenden Ansprüche, **dadurch gekennzeichnet, dass** der erste Klärbehälter (12) in seinem Deckel eine verschließbare Öffnung (32) umfasst, in die der Filterbehälter (40) zum Reinigen einsetzbar ist.

## Claims

1. A small sewage treatment plant (10), comprising
a first sewage tank (12) with an inlet (14) for sewage, in which a preliminary clarification takes place as a result of the sinking of solid particles (16) to the bottom of the first sewage tank (12),
a second sewage tank (24) which is connected to the first sewage tank (12) via an overflow (22) through which pre-clarified sewage is feedable to the second sewage tank (24),
a filtering device (26) in the second sewage tank (24), which filtering device comprises several filters (42) and to which the pre-clarified sewage is fed from above for further clarification,
and an outlet (30) which is arranged below the filtering device (26) and via which the filtered sewage is dischargeable,
**characterized in that** the filtering device (26) comprises a rotary plate (38) which is rotatable about a vertical axis of rotation (36) and stores several filter containers (40), each filter container (40) comprising several filters (42) arranged one above the other, and that
in a lid (33) of the second sewage tank (24) a closeable tank opening (39) is provided, via which at least one filter (42) is removable when the associated filter container (40) is opposite the tank opening (39) after a corresponding rotation of the rotary plate (38).

2. The small sewage treatment plant according to claim 1, **characterized in that** the filter container (40) is removable together with its filters (42).

3. The small sewage treatment plant according to claim 1 or 2, **characterized in that** a distribution device (44) is present above the filtering device (26), which distribution device is connected to the overflow (22) and via which pre-clarified sewage is feedable to at least one filter container (40).

4. The small sewage treatment plant according to one of the preceding claims, **characterized in that** each filter container (40) is configured as a cylinder with a vertical longitudinal axis, which receives the filters (42) with circular cross-section.

5. The small sewage treatment plant according to one of the preceding claims, in which several filters (42) of a filter container (40) are combined to one filter group, the filter group being removable via the tank opening (39).

6. The small sewage treatment plant according to one of the preceding claims, **characterized in that** the first sewage tank (12) is formed as a closed tank.

7. The small sewage treatment plant according to one of the preceding claims, **characterized in that** the first sewage tank (12) is rigidly connected to the second sewage tank (24).

8. The small sewage treatment plant according to one of the preceding claims, **characterized in that** the first sewage tank (12) and the second sewage tank (24) together comprise a holding volume of 10 to 40 m³.

9. The small sewage treatment plant according to one of the preceding claims, **characterized in that** the distribution device (44) comprises at least one throttle element (52) with which the supply of pre-clarified sewage to the filter container can be throttled.

10. The small sewage treatment plant according to one of the preceding claims, **characterized in that** the first sewage tank (12) comprises in its lid a closeable opening (32) into which the filter container (40) can be inserted for cleaning.

## Revendications

1. Microstation d'épuration (10), comprenant
un premier décanteur (12) avec une alimentation (14) pour les eaux usées, une décantation préalable intervenant du fait de la descente des particules solides (16) au fond du premier décanteur (12),
un second décanteur (24) relié au premier décanteur (12) par l'intermédiaire d'un trop-plein (22) grâce auquel les eaux usées préalablement décantées peuvent être acheminées jusqu'au second décanteur (24),
un dispositif de filtration (26) comprenant plusieurs filtres (42) et situé dans le second décanteur (24) et jusqu'auquel les eaux usées préalablement décantées sont acheminées par le haut en vue d'une décantation supplémentaire,
et un drain (30) situé sous le dispositif de filtration (26) et grâce auquel les eaux usées filtrées peuvent être évacuées,
**caractérisée en ce que** le dispositif de filtration (26) comprend un plateau rotatif (38) pouvant tourner autour d'un axe de rotation vertical (36) et accueillant plusieurs réservoirs de filtration (40), chaque réservoir de filtration (40) comprenant plusieurs filtres (42) agencés les uns au-dessus des autres, et **en ce que**
un orifice de réservoir (39), pouvant être fermé et à travers lequel au moins un filtre (42) peut être retiré lorsque le réservoir de filtration (40) approprié fait face à l'orifice de réservoir (39) après une rotation correspondant du plateau rotatif (38), est présent dans un couvercle (33) du second décanteur (24).

2. Microstation d'épuration selon la revendication 1, **caractérisée en ce que** le réservoir de filtration (40) peut être retiré en même temps que ses filtres (42).

3. Microstation d'épuration selon la revendication 1 ou 2, **caractérisée en ce qu'**un dispositif de distribution (44), relié au trop-plein (22) et grâce auquel des eaux usées préalablement décantées peuvent être acheminées jusqu'à au moins un réservoir de filtration (40), est présent au-dessus du dispositif de filtration (26).

4. Microstation d'épuration selon l'une quelconque des revendications précédentes, **caractérisée en ce que** chaque réservoir de filtration (40) est réalisé sous la forme d'un cylindre présentant un axe longitudinal vertical et accueillant les filtres (42) à section transversale circulaire.

5. Microstation d'épuration selon l'une quelconque des revendications précédentes, dans laquelle plusieurs filtres (42) d'un réservoir de filtration (40) sont rassemblés pour obtenir un groupe de filtres, ledit groupe de filtres pouvant être retiré à travers l'orifice de réservoir (39).

6. Microstation d'épuration selon l'une quelconque des revendications précédentes, **caractérisée en ce que** le premier décanteur (12) est réalisé sous la forme d'un réservoir fermé.

7. Microstation d'épuration selon l'une quelconque des revendications précédentes, **caractérisée en ce que** le premier décanteur (12) est relié de manière rigide au second décanteur (24).

8. Microstation d'épuration selon l'une quelconque des revendications précédentes, **caractérisée en ce que** le premier décanteur (12) et le second décanteur (24) ont en commun un volume de réception compris entre 10 et 40 m³.

9. Microstation d'épuration selon l'une quelconque des revendications précédentes, **caractérisée en ce que** le dispositif de distribution (44) comprend au moins un élément restricteur (52) avec lequel l'afflux des eaux usées préalablement décantées vers le réservoir de filtration peut être restreint.

10. Microstation d'épuration selon l'une quelconque des revendications précédentes, **caractérisée en ce que** le premier décanteur (12) comprend dans son couvercle un orifice (32) pouvant être fermé et dans lequel le réservoir de filtration (40) peut être introduit en vue d'un nettoyage.
